**Europäisches Patentamt**

(19) **European Patent Office**

**Office européen des brevets**

(11) Publication number: **0 052 015**
**B1**

(12) **EUROPEAN PATENT SPECIFICATION**

(45) Date of publication of patent specification: **20.08.86**

(21) Application number: **81305338.6**

(22) Date of filing: **10.11.81**

(51) Int. Cl.⁴: **G 01 M 1/30,** G 01 M 1/32, G 01 M 1/34

(54) **Method of correcting unbalance of a rotating body.**

(30) Priority: **11.11.80 JP 159271/80**

(43) Date of publication of application:
**19.05.82 Bulletin 82/20**

(45) Publication of the grant of the patent:
**20.08.86 Bulletin 86/34**

(84) Designated Contracting States:
**DE FR GB**

(56) References cited:
**DE-A-2 705 217**
**DE-B-1 214 903**
**US-A-2 954 711**

(73) Proprietor: **Matsushita Electric Industrial Co., Ltd.**
**1006, Oaza Kadoma**
**Kadoma-shi Osaka-fu, 571 (JP)**

(72) Inventor: **Suzuki, Masaki**
**1-20-4-306, Higashi Nakafuri**
**Hirakata-shi Osaka (JP)**
Inventor: **Hasegawa, Mikio**
**4-27, Hama-machi**
**Kadoma-shi Osaka (JP)**

(74) Representative: **Senior, Alan Murray et al**
**J.A. KEMP & CO 14 South Square Gray's Inn**
**London WC1R 5EU (GB)**

Courier Press, Leamington Spa, England.

# Description

This invention relates generally to a method of correcting unbalance in a rotating body, such as a rotor of an electrical motor or the like, and more particularly the present invention relates to such a method in which holes or grooves are made in the rotating body by feeding a drill or a milling cutter in a direction parallel to the axis of the rotating body.

Methods of determining or modifying the corrective amount(s) or weight(s) based on measured unbalanced values, by making a hole or holes in a radial direction of a rotating body are known. However, since the depth of drilling is not proportional to the correction achieved, the corrective amount has to be corrected or modified in some way.

Some motor rotors have a structure which is not suitable for receiving holes in its radial direction because of its laminated core. In such a case, although it is necessary to correct unbalance by machining the rotor with a milling cutter or drill fed in a direction parallel to the axis of the rotor, residual unbalance is apt to occur due to the deviation of the center of gravity of the removed weight from each correcting plane. The occurrence of such residual unbalance is known as a correcting plane error.

Since the correcting plane error affects not only the corrective amount of the plane but also the other correcting plane which is located in the vicinity of the other end of the rotor, recorrection of the corrective amounts at both the correcting planes has been thought impossible.

In the known techniques as exemplified by DE—A—2 705 217 and US—A—2 954 711 in order to avoid such errors, the corrective machining length in the direction of the axis is made as small as possible or a milling machining method has been adopted for putting the center of gravity of the removing weight at the same position all the time.

In the case that the distance between two correcting planes is very small, the ratio between the unbalanced amount after correction and initial unbalanced amount is only 1/2 to 1/4. Therefore, in order to obtain the necessary dynamic balance it has been necessary hitherto to repeat measurements and corrections several times both in automatic correction or manual correction. For this reason, the conventional method for obtaining balance of a rotating body has suffered from the problem that it takes a long time and that the working cost and balancing equipment cost are high.

The aim of the present invention is to remove or reduce the above-mentioned disadvantages and drawbacks.

According to the present invention, there is provided a method of correcting the dynamic unbalance of a rotating body by either adding or subtracting corrective amounts of material in the axial direction of said rotating body which is unbalanced with respect to its axis, including the step of i) determining first correcting positions and corresponding corrective machining weights in accordance with information relating to each of two initial unbalance values at corresponding two predetermined correcting planes which are axially spaced apart and normal to the axis of rotation of said rotating body; and as a last step machining said rotating body for correcting said dynamic unbalance in accordance with final correcting positions and corresponding final machining weights respectively obtained by considering inter alia said first correcting positions and said corresponding corrective machining weights, characterized by the steps of ii) calculating the position of the center of gravity and the amounts of theoretical corrective portions on the assumption that said theoretical corrective portions are effected in accordance with said first correcting positions and said corresponding corrective machining weights; iii) calculating two residual unbalanced values, which are located in said two predetermined planes respectively, from the positions and the corresponding amounts of the theoretical corrective portions; iv) judging whether one or both of said residual unbalanced values is/are within a given range or not; v) in the case that both of said residual unbalanced values have been detected to be within said given range in the judging step, effecting said last step, whereby the positions and the corresponding amounts of said theoretical corrective portions correspond to said final correcting positions and said corresponding final machining weights respectively or, in the case that one or both of said residual unbalanced values is/are out of said given range replacing in step i) the initial unbalanced values with new initial unbalanced values which are obtained from said residual unbalanced values and said initial unbalanced values, and repeating the sequence from step i) to step v).

The invention also provides a method of correcting the dynamic unbalance of a rotating body by either adding or subtracting corrective amounts of material in the axial direction of said rotating body which is unbalanced with respect to its axis, including the step of i) determining first correcting positions and corresponding corrective machining weights in accordance with information relating to each of two initial unbalance values at corresponding two predetermined correcting planes which are axially spaced apart and normal to the axis of rotation of said rotating body; and as a last step machining said rotating body for correcting said dynamic unbalance in accordance with final correcting positions and corresponding final machining weights respectively obtained by considering inter alia said first correcting positions and said corresponding corrective machining weights, characterized by the steps of ii) calculating the position of the center of gravity and the amounts of theoretical corrective portions on the assumption that said theoretical corrective portions are effected in accordance with said first correcting positions and said corresponding corrective machining weights; iii) calculating two residual unbalanced values, which are located in said two predetermined planes respectively, from the positions and the corresponding amounts of the theoretical corrective portions; iv) judging whether one or both of said residual unbalanced values is/are within a given range or not; v) in the case that both of said residual unbalanced values have been detected to be within said given range in the judging step, effecting said last step, whereby the positions and the corresponding amounts of said theoretical corrective portions correspond to said final correcting positions and said corresponding final machining weights respectively or, in the case that one or both of said residual unbalanced values is/are out of said given range replacing in step i) the initial unbalanced values with new initial unbalanced values, said new initial unbalanced values being obtained by assuming two new corresponding planes, each including the location of said center of gravity obtained in said position calculating step (ii), and by calculating information relating to the unbalance at the assumed planes from information relating to the location of said center of gravity of said corrective machining portions and from said initial unbalanced amounts, said information relating to unbalance at the assumed planes being converted into information relating to said newly set initial unbalanced amounts and repeating the sequence from step (i) to step (v).

With the invention, the initial unbalanced information can be processed in a computer so that necessary corrective machining data will be obtained by performing simulation.

The invention will be more clearly understood from the following description given by way of example only with reference to the accompanying drawings, in which:

Figs. 1 and 2 show views of machining a rotating body by means of a milling cutter and a drill for rotating body by means of a milling cutter and a drill for correcting dynamic unbalance;

Fig. 3 is a flowchart showing an embodiment of the operating steps for performing the method according to the present invention;

Fig. 4 is a schematic view of a rotor of an electrical motor which is an example of an object on which the method according to the present invention can be employed;

Fig. 5 is a schematic perspective view of the rotor of Fig. 4, showing various vectors used in the calculation of the method of Fig. 3;

Fig. 6 is a vector diagram showing a calculating process in the present invention method;

Fig. 7 is a partial cross-sectional view of the rotor of Figs. 4 and 5, showing the way of machining by means of a milling cutter;

Fig. 8 is a graphical representation showing the relationship between corrective weight and machining length, and between corrective weight and position of center of gravity of a removing portion;

Fig. 9 is a view showing a conventional correcting method;

Fig. 10 is a graphical representation showing the relationship between the depth of drill cutting in the conventional method of Fig. 9 and corrective unbalanced amount;

Fig. 11 is a flowchart showing another arrangement of the operating steps for performing the method according to the present invention; and

Fig. 12 is a schematic perspective view of the rotor of Fig. 4, showing various vectors used in the calculation of the method of Fig. 11.

The same or corresponding elements and parts are designated at like numerals throughout the drawings.

Prior to describing the embodiments of the present invention, the above-mentioned known method will be further discussed for better understanding of the present invention.

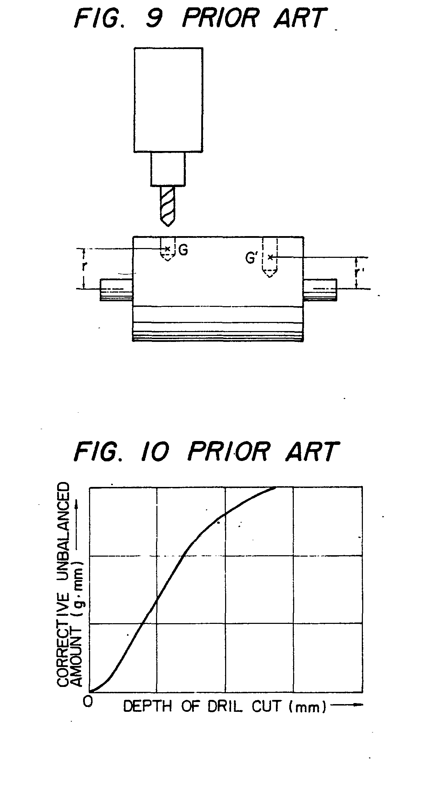

Fig. 9 shows a conventional method of making holes in a rotating body R in the radial direction of the rotating body R. The reference G indicates the center of gravity of the weight of a removed portion indicated by dotted lines. The reference "r" indicates the radius of the center of gravity G. The reference G' and "r'" respectively indicate the center of gravity and the radius of the removed part from another hole.

Fig. 10 is a graphical representation of unbalance corrective amount with respect to the depth of drill cutting. From the curve of Fig. 10, it will be understood that the unbalance corrective amount is not proportional to the depth of drill cutting when cutting hole(s) is/are made in the radial direction.

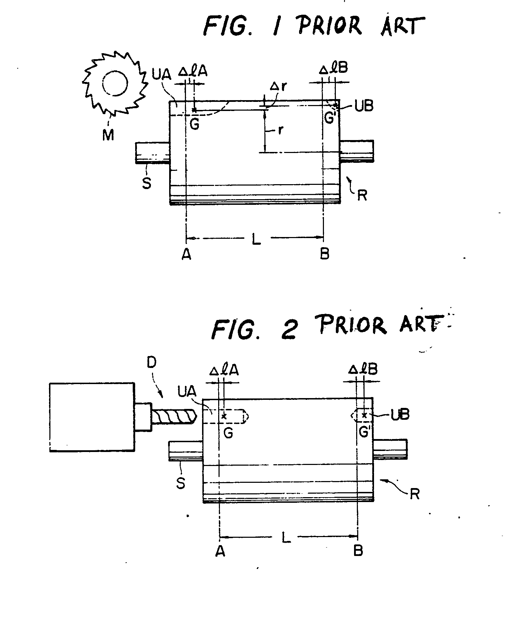

Figs. 1 and 2 respectively show other known methods. In Figs. 1 and 2, the references A and B respectively indicate correcting planes axially spaced and normal to the axis of the rotation of the rotor R so that the correcting planes A and B pass through the rotor R. The reference L indicates the distance between these two correcting planes A and B. The references UA and UB indicate removed weights corresponding to the weight of the material removed from the rotating body R by machining for neutralizing the unbalanced amounts. Fig. 1 illustrates a way of removing the material by means of a milling cutter M, while Fig. 2 illustrates a way of removing the material by means of a drill D. In both Figs. 1 and 2, the milling cutter M and the drill D are fed in a direction parallel to the axis of the rotating body R. The axis is usually included in the shaft S of the rotating body R. The center of gravity of the removed portion is indicated by the reference G in connection with the left correcting plane A, while the center of gravity of the removed portion is indicated by the reference G' in connection with the right correcting plane B.

Although the centers of gravity G and G' should be on the correcting planes A and B respectively, the positions of the centers of gravity G and G' are apt to be deviated or shifted from the correcting planes A and B due to errors. Assuming that the left center of gravity G has been deviated from the left correcting plane A by $\Delta$IA, residual unbalance expressed in terms of

$$\frac{\Delta IA}{L}UA$$

occurs at the left correcting plane A, while another residual unbalance expressed in terms of

$$-\frac{\Delta IA}{L}UA$$

occurs at the right correcting plane B. In the same manner, the deviation of the right center of gravity G' results in the occurrence of residual unbalance at the left and right correcting planes A and B. The occurrence of such residual unbalance is known as correcting plane errors. Since the amount of correction at each of the left and right correcting planes A and B affects reciprocally, recorrection of the corrective amounts has been impossible hitherto.

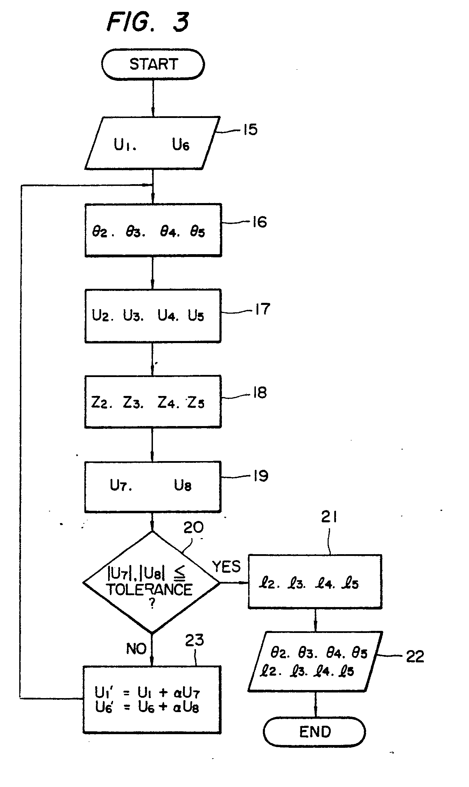

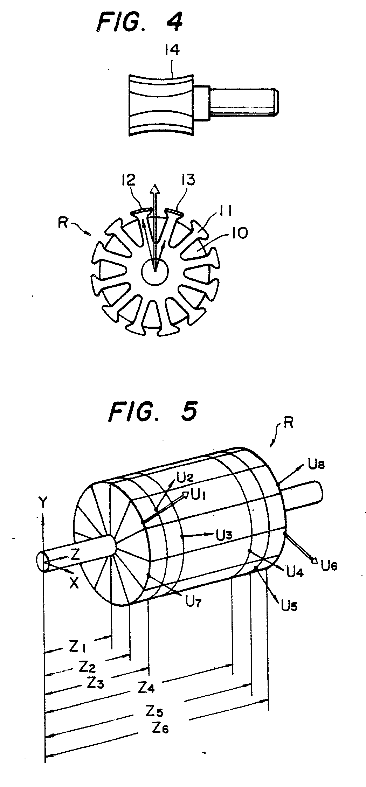

The present invention will be described with reference to Figs. 3 to 8 hereinbelow. Fig. 3 is a flowchart showing all the computer steps used for performing the method according to the present invention. Fig. 4 shows a rotating body R which is an objective of correction so that the rotating body R will be balanced. The rotating body R of Fig. 4 is a rotor of a small commutator-motor, and the rotor R has twelve slots 10 radially extending from the axis thereof. The reference numeral 11 indicates the core of the rotor R, and the correction of the dynamic unbalance of the rotor R is effected by cutting away the outer periphery of the rotor by means of a drum-shaped milling cutter 14 which is fed in the direction parallel to the axis of the rotor R. In the illustrated example, two peripheral portions 12 and 13 are simultaneously machined. The number of peripheral portions to be machined may be changed in accordance with the width of the milling cutter 14. In the above, the periphery of the drum-shaped milling cutter 14 is concave to the outer shape of the core 11 as shown in Fig. 4.

Fig. 5 is a vector diagram showing the balancing condition of the rotor R of Fig. 4. Measured initial unbalance vectors U1 and U6 reside in end planes which are respectively expressed by Z=Z1 and Z=Z6. Corrective vectors U2, U3, U4 and U5 respectively reside in planes expressed by Z=Z2, Z=Z3, Z=Z4 and Z=Z5, where each of the planes Z=Z2, Z=Z3, Z=Z4 and Z=Z5 includes the center of gravity of each corresponding corrective weight. It is assumed that residual unbalance vectors U7 and U8 respectively reside in the planes Z=Z1 and Z=Z6 in the same manner as the initial unbalance vectors U1 and U6.

Turning back to Fig. 3, the reference 15 ·designates a step of inputting the initial unbalanced amounts. In this step, the initial unbalanced amounts U1 and U6, which have been measured by a conventional dynamic balance tester, are applied to a computer which is used for performing the method according to the present invention. Each of the unbalanced amounts U1 and U6 is expressed in terms of an unbalanced weight u1 and u6 (unit: grams) and direction $\theta$1 and $\theta$6 (unit: degrees) to be cut away.

A step 16 of determining the corrective angles follows the above-mentioned step 15. In this step 16, the directions of the corrective vectors U2 and U3 for correcting the initial unbalance U1, namely the directions of the core 11 to be cut away which directions are expressed in angles $\theta$2 and $\theta$3 (unit: degrees), are determined in such a manner that the following relationship is satisfied:

$$\theta2 \leqq \theta1 < \theta3 = \theta2 + 30°$$

wherein

$$\theta2 = 0°, 30°, 60° \ldots 330°$$

The directions $\theta$4 and $\theta$5 of other corrective vectors U4 and U5 for correcting the other initial unbalance vector U6 are determined in the same manner as in the above.

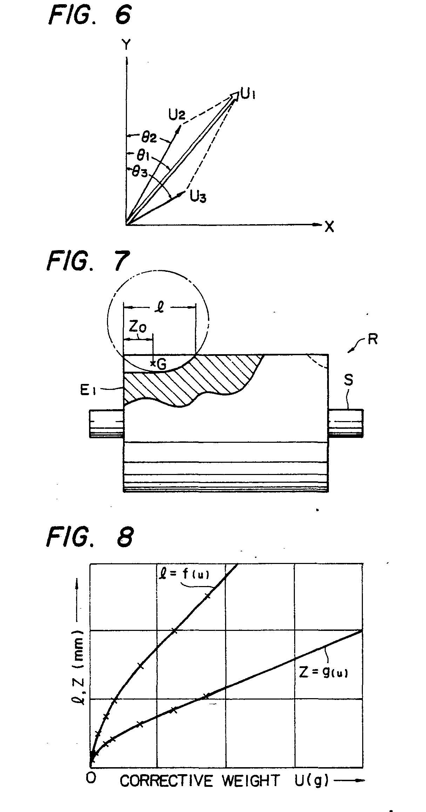

A step 17 following the step 16 is for determining the corrective machining weights. In this step 17, the magnitudes u2 and u3 (unit: grams) of the corrective vectors U2 and U3 for U1 are determined by the static balancing condition at the plane Z=Z1 as shown in Fig. 6 without considering the effect of center gravity shifting. Namely, u2 and u3 are respectively given by:

$$u2 = \frac{\sin(\theta3 - \theta1)}{\sin(\theta3 - \theta2)}u1$$

$$u3 = \frac{\sin(\theta1 - \theta2)}{\sin(\theta3 - \theta2)}u1$$

The magnitudes u4 and u5 of the corrective vectors U4 and U5 for U6 are calculated in the same manner as follows:

$$u4 = \frac{\sin(\theta5 - \theta6)}{\sin(\theta5 - \theta4)}u6$$

$$u5 = \frac{\sin(\theta6 - \theta4)}{\sin(\theta5 - \theta4)}u6$$

In the following step 18, of calculating the theoretical centre of gravity location, the distance Z0 between the end surface E1 of the rotor R and the center of gravity G (see Fig.7) of the portion to be removed from the end surface E1 is obtained in connection with respective removing weights u2, u3, u4 and u5. Namely, the position of each center of gravity is obtained under an assumption that machining or cutting has been effected to remove the corrective weight u2, u3, u4 or u5. The distance between the end surface E1 and the center of gravity G2 of the removing weight u2 is expressed in terms of Z02. In the same manner, like distances Z03 to Z05 between the end surface E1 and the centers of gravity G3, G4 and G5 of the removing weights u3, u4 and u5 are obtained. From these distances Z02 to Z05, the Z ordinates of the working points of the corrective vectors U2, U3, U4 and U5 will be obtained as follows:

$$Z2=Z1+Z02, \quad Z3=Z1+Z03$$

$$Z4=Z6-Z04, \quad Z5=Z6-Z05$$

In the above, since it is difficult to directly obtain the positions Z0 of the centers of gravity from the removing weights "u", while it requires much time for the calculation, in practice, the value of Z0 will be approximated as follows: Namely, a plurality of corrective weights "u" corresponding to a plurality of machining or cutting lengths l (see Fig. 7), and the distances Z0 indicating the position of the centers of gravity of the respective removing portions are obtained in advance. Then curves obtained from the above data will be plotted on a graph as shown in Fig. 8. From the graph of Fig. 8, the corrective machining weight and the center of gravity location may be respectively expressed by way of polynominal approximations expressed in terms of l=f(u) and Z0=g(u). The values Z0 may be obtained by substituting the values of "u" into these formulas. Alternatively, the values of "u" may be divided into a plurality of sections so that each section is represented by a corresponding formula, allowing substitution of the values of "u" to find the values of Z0.

A following step 19 is for calculating the residual unbalanced values U7 and U8, and in this step, residual unbalanced values U7 and U8, which will be left when the corrective machining is made in accordance with the data determined by the steps 16, 17 and 18, are derived from a formula of dynamic balance. The condition for the dynamic balance of the rotor shown in Fig. 5 is that the following two equations are fulfilled, representing the residual unbalanced values by U7 and U8.

$$\text{Resultant unbalance}=U1-U2-U3-U4-U5\\+U6-U7-U8=0$$

$$\text{Resultant moment}=Z1U1-Z2U2-Z3U3-Z4U4\\-Z5U5+Z6U6-Z1U7-Z6U8=0$$

From the above formula of resultant unbalance, a relationship of U7=−U8 is derived, and this relationship is substituted in the formula of resultant moment to obtain U8 as follows:

$$U8=\frac{1}{Z6-Z1}(Z1U1-Z2U2-Z3U3-Z4U4\\-Z5U5+Z6U6)$$

The values of the residual unbalanced values U7 and U8 are respectively obtained from the above operations. In actual vector calculation, the vector components may be divided into "x" component and "y" component. In the above formula for obtaining the residual unbalance value initial unbalanced values, which have been actually measured, are used as the values of U1 and U6. Namely, substituted U1' and U6' obtained in a new-initial unbalanced amounts determining step 23 of Fig. 3 are not used for these values.

In a step 20 of judging, which follows the step 19, it is detected whether the absolute values |U7| and |U8| of the residual unbalanced amounts U7 and U8 are smaller than their tolerances or not. If the absolute values are within the tolerances, a following step 21 for calculating machining length will take place because the unbalanced amounts are negligibly small. In the step 21, machining lengths l2, l3, l4 and l5 respectively corresponding to corrective weights u2, u3, u4 and u5 are calculated by the formula of l=f(u) described in connection with the step 18 for calculating the position of center of gravity.

After the step 21, a machining data emitting step 22 will take place. In this step 22, θ2, θ3, θ4, θ5, l2, l3, l4 and l5 will be emitted from the computer as machining data, completing all the calculations.

If the condition in the judging step 20 is not fulfilled, the step 23 is executed in place of the step 21. The step 23 is for determining new initial unbalanced amounts U1' and U6' by adding the residual unbalanced amounts U7 and U8 to the initial unbalanced amounts U1 and U6 as follows:

$$U1'=U1+\alpha U7$$

$$U6'=U6+\alpha U8$$

In the above, α is a constant for speeding up the convergence of the solution. The data U1' and U6' obtained in the step 23 are returned to the correcting angle determining step 16, so that U1 and U6 will be substituted with U1' and U6'. The steps from 16 to 20 are executed in the same manner as described in the above using U1' and U6'. Calculations in the steps 16 to 19 will be repeated until the condition of the judging step 20 is fulfilled. As a result, machining data which satisfies the condition of the step 20 will be finally emitted in the step 22.

In the above-described embodiment, although the correcting planes Z=Z1 and Z=Z6 are respectively set at both end surfaces E1 and E2 of the rotor R, these correcting planes may be set arbitrarily. Furthermore, although it has been described that correction of the dynamic unbalance is perfectly effected at two planes, it is possible to leave a given amount of residual unbalance on purpose by adjusting the amount of corrective machining if desired.

The residual unbalanced amounts may be obtained in a different way from the above-described one. According to this method, which may constitute a modification of the above described first embodiment, the two formulas relating to the balancing condition, which are described in connection with the residual unbalanced value calculating step 19, are not used. Namely, residual unbalanced values at the planes A and B of Fig. 1 will be obtained as follows based on the fact that the corrective amount UA at the plane A results in the occurrence of residual unbalance of

$$\frac{\Delta IA}{L}UA$$

and

$$-\frac{\Delta IA}{L}UA$$

at the planes A and B, while the corrective amount UB at the plane B results in the occurrence of residual unbalance of

$$-\frac{\Delta IB}{L}UB$$

and

$$\frac{\Delta IB}{L}UB$$

at the planes A and B:

$$UA'=UA+\frac{\Delta IA}{L}UA-\frac{\Delta IB}{L}UB$$

$$UB'=UB-\frac{\Delta IA}{L}UA+\frac{\Delta IB}{L}UB$$

Therefore, by effecting corrective machining corresponding to U'A and U'B in place of effecting corrective machining corresponding to UA and UB, it is possible to modify the amount of corrective machining. This substantially corresponds to performing feedback of the amount of residual unbalance once in the calculating process of Fig. 1.

Furthermore, although the first embodiment has been described in connection with a case of two components of force of each correcting plane whose corrective machining position has been limited, similar calculating processes may be applied to other cases, such as a case that the corrective machining direction is not limited, a case that no component of force is required or a case of more than two components of force. In the first embodiment, the shifting of the center of gravity of the corrective weight portion in the direction Z by milling cutter machining is taken into account as shown in Fig. 7, while slight shifting Δr of the center of gravity in the radial direction shown in Fig. 1 has been ignored. However, the value of Δr may be obtained by adding calculation to calculating step 18 of Fig. 3, so that this component may be included by substituting the same by using

$$(1+\frac{\Delta r}{r})u$$

in place of "u" in the step of calculating the residual unbalanced amounts.

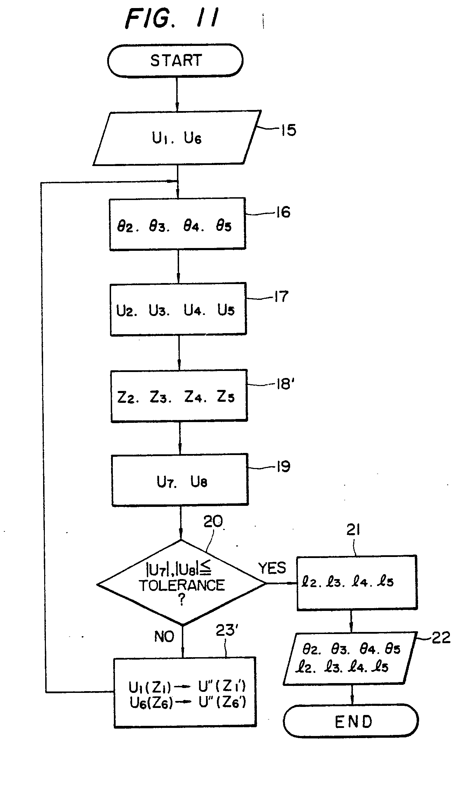

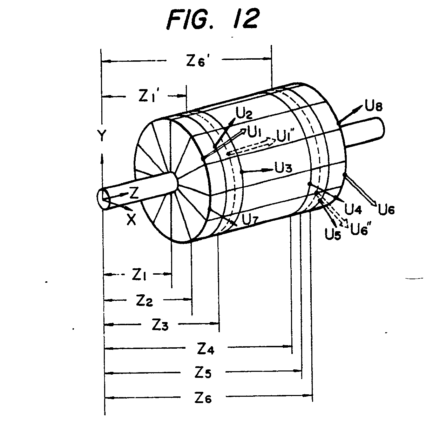

Another modification or embodiment will be described with reference to Figs. 11 and 12. Fig. 11 is a flowchart, and in this flowchart, a step 15 of inputting initial unbalanced values, a step 16 of determining corrective angles and a step 17 of determining corrective weights are performed in the same manner as in the above-described embodiment. However, the step 18 of calculating the locations of centers of gravity is changed as follows: Namely, in addition to the calculation of the step 18 of Fig. 3, the step 18' of Fig. 11 comprises calculating steps for obtaining centers of gravity Z1' and Z6' which are respectively imagined as the resultant centers of gravity between the two vectors U2 and U3 and between the other two vectors U4 and U5. In detail, the positions Z1' and Z6' of the resultant centers of gravity U1 and U6 will be given by:

$$Z1'=\frac{u2Z2+u3Z3}{u2+u3}$$

$$Z6'=\frac{u4Z4+u5Z5}{u4+u5}$$

The following step 19 of calculating residual unbalanced values, the step 20 of judging, the step 21 of calculating machining lengths and the step 22 of emitting machining data are the same as in the flowchart of Fig. 3. The new initial unbalanced values determining step 23 of Fig. 3 is replaced with a correcting plane converting step 23' in Fig. 11. In this step 23', the initial unbalanced values U1(u1, θ1) and U6(u6, θ6) at the predetermined correcting planes Z=Z1 and Z=Z6 are converted into initial unbalanced values U1''(u1'', θ1'') and U6(u6'', θ6'') at Z ordinates Z=Z1' and Z=Z6' which have been obtained in the step 18' of calculating center of gravity positions. Formulas for effecting this conversion are also derived from the formulas of dynamic balance. According to these formulas:

Resultant unbalance=U1+U6=U1''+U6''

Resultant moment=Z1U1+Z6U6=Z1'U1'' +Z6'U6''

From these formulas U1'' and U6'' are given by:

$$U1''=\frac{(Z6'-Z1)U1-(Z6-Z6')U6}{Z6'-Z1'}$$

$$U6''=\frac{-(Z1'-Z1)U1+(Z6-Z1')U6}{Z6'-Z1'}$$

Then the values of U1'' and U6'' are returned or fed back to the step 16 of determining correcting angles so that U1 and U6 will be replaced. The following calculating steps are repeated so that each of the correcting planes at the time of indicating dynamic unbalance will closely approach position of the center of gravity of the corrective machining portion. As a result, it is possible to cancel so called correcting plane errors, and therefore, machining data fulfilling the condition of the judging step 20 will be emitted.

In the above-described embodiments of the present invention, the rotor is machined by means of a milling cutter, drill or the like so as to remove a given amount or weight therefrom. However, in place of removing a corrective amount or weight, a corresponding corrective amount may be added to the rotor. For instance, several holes may be made axially in the rotor in advance, and corrective weights may be filled in some of these holes to offset the unbalance.

From the foregoing description, it will be understood that the solution for the corrective machining amounts, which provides dynamic balance of a rotating body, can be obtained by performing operations in a computer in a correcting apparatus in such a manner that measurement and corrective machining are repeatedly simulated. Consequently, the solution, which has been difficult to obtain with a high accuracy hitherto, can be found with relatively simple steps, while the accuracy of the solution is sufficiently high in practical use. According to the present invention, since there is no need to repeat measurements and machinings because high accuracy in balance can be obtained by machining the rotating body once, the cost required for balancing work can be reduced, while the cost of an automatic correcting apparatus can also be reduced.

**Claims**

1. A method of correcting the dynamic unbalance of a rotating body by either adding or subtracting corrective amounts of material in the axial direction of said rotating body which is unbalanced with respect to its axis, including the step of i) determining first correcting positions and corresponding corrective machining weights in accordance with information relating to each of two initial unbalance values at corresponding two predetermined correcting planes which are axially spaced apart and normal to the axis of rotation of said rotating body; and as a last step machining said rotating body for correcting said dynamic unbalance in accordance with final correcting positions and corresponding final machining weights respectively obtained by considering inter alia said first correcting positions and said corresponding corrective machining weights, characterized by the steps of ii) calculating the position of the center of gravity and the amounts of theoretical corrective portions on the assumption that said theoretical corrective portions are effected in accordance with said first correcting positions and said corresponding corrective machining weights; iii) calculating two residual unbalanced values, which are located in said two predetermined planes respectively, from the positions and the corresponding amounts of the theoretical corrective portions; iv) judging whether one or both of said residual unbalanced values is/are within a given range or not; v) in the case that both of said residual unbalanced values have been detected to be within said given range in the judging step, effecting said last step, whereby the positions and the corresponding amounts of said theoretical corrective portions correspond to said final correcting positions and said corresponding final machining weights respectively or, in the case that one or both of said residual unbalanced values is/are out of said given range replacing in step i) the initial unbalanced values with new initial unbalanced values which are obtained from said residual unbalanced values and said initial unbalanced values, and repeating the sequence from step i) to step v).

2. A method of correcting the dynamic unbalance of a rotating body by either adding or subtracting corrective amounts of material in the axial direction of said rotating body which is unbalanced with respect to its axis, including the step of i) determining first correcting positions and corresponding corrective machining weights in accordance with information relating to each of two initial unbalance values at corresponding two predetermined correcting planes which are axially spaced apart and normal to the axis of rotation of said rotating body; and as a last step machining said rotating body for correcting said dynamic unbalance in accordance with final correcting positions and corresponding final machining weights respectively obtained by considering inter alia said first correcting positions and said corresponding corrective machining weights, characterized by the steps of ii) calculating the position of the center of gravity and the amounts of theoretical corrective portions on the assumption that said theoretical corrective portions are effected in accordance with said first correcting positions and said corresponding corrective machining weights; iii) calculating two residual unbalanced values, which are located in said two predetermined planes respectively, from the positions and the corresponding amounts of the theoretical corrective portions; iv) judging whether one or both of said residual unbalanced values is/are within a given range or not; v) in the case that both of said residual unbalanced values have been detected to be within said given range in the judging step, effecting said last step, whereby the positions and the corresponding amounts of said theoretical corrective portions correspond to said final correcting positions and said corresponding final machining weights respectively or, in the case that one or both of said residual unbalanced values is/are out of said given range replacing in step i) the initial unbalanced values with new initial unbalanced values, said new initial unbalanced values being obtained by assuming two new corresponding planes, each including the location of said center of gravity obtained in said position calculating step (ii), and by calculating information relating to the unbalance at the assumed planes from information relating to the location of said center of gravity of said corrective machining portions and from said initial unbalanced amounts, said information relating to unbalance at the assumed planes being converted into information relating to said newly set initial unbalanced amounts and repeating the sequence from step (i) to step (v).

3. A method of correcting the dynamic unbalance of a rotating body as claimed in claim 1 or 2, characterised in that said first correcting positions are at different angular positions on said rotating body with a given angular interval between them.

4. A method of correcting the dynamic unbalance of a rotating body as claimed in claim 3, characterised in that, from vectors indicative of said initial unbalanced values, there are determined a plurality of vectors representing said first correcting positions and corrective machining weights, said first correcting position being in given relation to each other.

5. A method of correcting the dynamic unbalance of a rotating body as claimed in claim 1, 2, 3 or 4 characterised in that each said new initial unbalance value is obtained by adding a function of said residual unbalance value to said initial unbalance value.

6. A method of correcting the dynamic unbalance of a rotating body as claimed in claim 2, characterised in that said step (ii) of calculating the position of the center of gravity includes calculating the locations of each resultant center of gravity of two adjacent corrective vectors which are vector components of each of said initial unbalanced values.

**Patentansprüche**

1. Verfahren zur Korrektur der dynamischen Unwucht eines rotierenden Körpers durch entweder Hinzufügen oder Wegnehmen von Korrekturmengen des Werkstoffs in axialer Richtung des rotierenden Körpers, der bezüglich seiner Achse eine Unwucht aufweist, mit dem Schritt des I) Bestimmens erster Korrekturpositionen und entsprechender Korrekturbearbeitungsgewichte gemäß der Information bezüglich zweier Anfangsunwuchtwerte in entsprechenden zwei vorbestimmten Korrekturebenen, die axial auseinander- und normal zur Drehachse des rotierenden Körpers liegen, und einem letzten Schritt des Bearbeitens des rotierenden Körpers zur Korrektur der dynamischen Unwucht gemäß letzten Korrekturpositionen bzw. entsprechenden letzten Bearbeitungsgewichten, die erhalten werden, indem unter anderem die ersten Korrekturpositionen und die entsprechenden Korrekturbearbeitungsgewichte berücksichtigt sind, gekennzeichnet durch die Schritte des II) Errechnens der Position des Schwerpunktes und der Größe von theoretischen Korrekturbereichen unter der Annahme, daß die theoretischen Korrekturbereiche gemäß den ersten Korrekturpositionen und den entsprechenden Korrekturbearbeitungsgewichte erhalten werden, III) des Errechnens zweier Restunwuchtwerte, die jeweils in den zwei vorbestimmten Ebenen angeordnet sind, aus den Positionen und den entsprechenden Größen der theoretischen Korrekturbereiche, IV) des Beurteilens, ob ein oder beide Restunwuchtwerte innerhalb eines vorgegebenen Bereiches liegt/liegen oder nicht, V) des Ausführens des letzten Schrittes in dem Fall, daß in dem Beurteilungsschritt festgestellt worden ist, daß beide Restunwuchtwerte innerhalb des vorgegebenen Bereichs liegen, wobei die Positionen und die entsprechenden Größen der theoretischen Korrektur bereiche den letzten Korrekturpositionen bzw. den entsprechenden letzten Bearbeitungsgewichten entsprechen, oder in dem Fall, daß ein oder beide Restunwuchtwerte außerhalb des vorgegebenen Bereiches liegt/liegen, des Ersetzens der Anfangsunwuchtwerte im Schritt I) durch neue Anfangsunwuchtwerte, die aus den Restunwuchtwerten und den Eingangsunwuchtwerten erhalten werden, und Wiederholens der Abfolge von Schritt I) bis Schritt V).

2. Verfahren zur Korrektur der dynamischen Unwucht eines rotierenden Körpers durch entweder Hinzufügen oder Wegnehmen von Korrekturmengen des Werkstoffs in axialer Richtung des rotierenden Körpers, der bezüglich seiner Achse eine Unwucht aufweist, mit dem Schritt des I) Bestimmens erster Korrekturpositionen und entsprechender Korrekturbearbeitungsgewichte gemäß der Information bezüglich zweier Anfangsunwuchtwerte in entsprechenden zwei vorbestimmten Korrekturebenen, die axial auseinander- und normal zur Drehachse des rotierenden Körpers liegen, und einem letzten Schritt des Bearbeitens des rotierenden Körpers zur Korrektur der dynamischen Unwucht gemäß letzten Korrekturpositionen bzw. entsprechenden letzten Bearbeitungsgewichten, die erhalten werden, indem unter anderem die ersten Korrekturpositionen und die entsprechenden Korrekturbearbeitungsgewichte berücksichtigt sind, gekennzeichnet durch die Schritte des II) Errechnens der Position des Schwerpunktes und der Größe von theoretischen Korrekturbereiche unter der Annahme, daß die theoretischen Korrekturbereiche gemäß den ersten Korrekturpositionen und den entsprechenden Korrekturbearbeitungsgewichten erhalten werden, III) des Errechnens zweier Restunwuchtwerte, die jeweils in den zwei vorbestimmten Ebenen angeordnet sind, aus den Positionen und den entsprechenden Größen der theoretischen Korrekturbereiche, IV) des Beurteilens, ob ein oder beide Restunwuchtwerte innerhalb eines vorgegebenen Bereiches liegt/liegen oder nicht, V) des Ausführens des letzten Schrittes in dem Fall, daß in dem Beurteilungsschritt festgestellt worden ist, daß beide Restunwuchtwerte innerhalb des vorgegebenen Bereiches liegen, wobei die neuen Anfangsunwuchtwerte erhalten werden, indem zwei neue entsprechende Ebenen hinzugefügt werden, von denen jede die Lage des Schwerpunktes, die durch die Berechnung im Schritt II) erhalten wurde, aufweist, und in dem die Information bzgl. der Unwucht in den hinzugefügten Ebenen aus der Information bzgl. der Lage des Schwerpunktes der Korrekturbearbeitungsbereiche und aus den Anfangsunwuchtgrößen berechnet wird, wobei die Information bzgl. der Unwucht in den hinzugefügten Ebenen in eine Information bzgl. der neu festgesetzten Anfangsunwuchtgrößen umgewandelt und die Abfolge von Schritt I) bis Schritt V) wiederholt wird.

3. Verfahren nach Anspruch 1 oder 2, dadurch gekennzeichnet, daß die ersten Korrekturpositionen sich in verschiedenen Winkelpositionen auf dem rotierenden Körper befinden, wobei zwischen ihnen ein vorgegebener Winkelabstand besteht.

4. Verfahren nach Anspruch 3, dadurch gekennzeichnet, daß eine Vielzahl von Vektoren, die die ersten Korrekturpositionen und die Korrekturbearbeitungsgewichte repräsentieren, durch die Vektoren, die die Anfangsunwuchtwerte bezeichnen, bestimmt werden, wobei die ersten Korrekturpositionen in vorgegebener Beziehung zueinander stehen.

5. Verfahren nach einem der Ansprüche 1 bis 4, dadurch gekennzeichnet, daß jeder der neuen Anfangsunwuchtwerte erhalten wird, indem eine Funktion des Restunwuchtwertes zu . dem Anfangsunwuchtwert hinzugefügt wird.

6. Verfahren nach Anspruch 2, dadurch gekennzeichnet, daß der Schritt (II) des Berechnens der Position des Schwerpunktes die Berechnung der Lagen jedes resultierenden Schwerpunktes zweier benachbarter Ausgleichsvektoren, die Vektorkomponenten jedes Anfangsunwuchtwertes sind, umfaßt.

**Revendications**

1. Procédé de correction de déséquilibre dynamique ou balourd d'un corps rotatif, soit en ajoutant, soit en retirant des quantités correctrices de matière dans la direction axiale dudit corps rotatif qui est déséquilibré par rapport à son axe, ce procédé comprenant l'étape i) dans laquelle on détermine les premières positions de correction et des poids correspondants d'usinage correcteur en fonction d'informations concernant chacune de deux valeurs de balourd initial dans deux plans de correction prédéterminés correspondants qui sont espacés axialement l'un de l'autre et qui sont perpendiculaires à l'axe de rotation dudit corps rotatif; et, en tant que dernière étape, on usine ledit corps rotatif pour corriger le déséquilibre dynamique précité en fonction des positions de correction finales et des poids d'usinage finals correspondants que l'on obtient respectivement en tenant compte, entre autres, desdites premières positions de correction et desdits poids d'usinage correcteurs correspondants, caractérisé par les étapes suivantes: ii) on calcule la position du centre de gravité et les quantités de portions correctrices théoriques en supposant que lesdites portions correctrices théoriques sont déterminées en fonction desdites premières positions de correction et desdits poids d'usinage correcteurs correspondants; iii) on calcule deux valeurs de balourd résiduel, qui se situent respectivement dans les deux plans prédéterminés, à partir des positions et des quantités correspondantes des portions correctrices théoriques; iv) on juge si oui ou non une seule ou les deux valeurs de balourd résiduel précitées se trouve(nt) dans une plage donnée; v) dans le cas où l'on détecte, au cours de l'étape de jugement, que les deux valeurs de balourd résiduel précités se trouvent dans ladite plage donnée, on exécute ladite dernière étape, grâce à quoi les positions et les quantités correspondantes desdites portions correctrices théoriques correspondent auxdites positions de correction finales et auxdits poids d'usinage finals correspondants ou, dans le cas où une seule ou les deux valeurs de balourd résiduel précités se trouve(nt) en-dehors de ladite plage donnée, on remplace au cours de l'étape i) les valeurs de balourd initial par de nouvelles valeurs de balourd initial que l'on obtient à partir desdites valeurs de balourd résiduel et desdites valeurs de balourd initial, et on répète la séquence de l'étape i) jusqu'à l'étape v).

2. Procédé de correction de déséquilibre dynamique ou balourd d'un corps rotatif, soit en ajoutant, soit en retirant des quantités correctrices de matière dans la direction axiale dudit corps rotatif qui est déséquilibré par rapport à son axe, ce procédé comprenant l'étape i) dans laquelle on détermine des premières positions de correction et des poids d'usinage correspondants en fonction d'informations concernant chacune deux valeurs de balourd initial dans deux plans de correction prédéterminés correspondants qui sont espacés axialement l'un de l'autre et qui sont perpdndiculaires à l'axe de rotation dudit corps tournant; et, en tant que dernière étape, on usine ledit corps tournant pour corriger le déséquilibre dynamique précité en fonction desdites positions de correction finales et des poids d'usinage finals correspondants que l'on obtient respectivement en tenant compte, entre autres, desdites premières positions de correction et desdits poids d'usinage correcteurs correspondants, caractérisé par les étapes suivantes: ii) on calcule la position du centre de gravité et les quantités de portions correctrices théoriques en supposant que lesdites portions correctrices théoriques ont été déterminées en fonction desdites premières positions de correction et desdits poids d'usinage correcteurs correspondants; iii) on calcule deux valeurs de balourd résiduel, qui se situent respectivement dans les deux plans prédéterminés précités, à partir des positions et des quantités correspondantes des portions correctrices théoriques; iv) on juge si oui ou non une seule ou les deux valeurs du balourd résiduel précitées se trouve(nt) dans une plage donnée; v) dans le cas où l'on a détecté que les deux valeurs de balourd résiduel précitées se trouvent dans ladite plage donnée au cours de l'étape de jugement, on exécute ladite dernière étape, grâce à quoi les positions et les quantités correspondantes desdites portions correctrices théoriques correspondent respectivement auxdites positions de correction finales et auxdits poids d'usinage finals correspondants ou, dans le cas où une seule ou les deux valeurs de balourd résiduel précitées se trouve(nt) dans ladite plage donnée, on remplace au cours de l'étape i) des valeurs de balourd initial par de nouvelles valeurs de balourd initial, lesdites nouvelles valeurs de balourd initial étant obtenues en supposant deux nouveaux plans correspondants comprenant chacun l'emplacement dudit centre de gravité obtenu au cours de ladite étape ii) de calcul de position et en calculant les informations concernant le balourd dans des plans supposés à partir d'informations relatives à l'emplacement dudit centre de gravité desdites portions d'usinage correctrices et à partir desdites quantités de balourd initial, lesdites informations concernant le balourd dans les plans supposés étant transformées en informations relatives auxdites quantités de balourd initial nouvellement établies et on répète la séquence de l'étape i) jusqu'à l'étape v).

3. Procédé de correction de déséquilibre dynamique ou balourd d'un corps rotatif selon la revendication 1 ou 2, caractérisé en ce que lesdites premières positions de correction se trouvent à des positions angulaires différentes sur ledit corps rotatif avec un intervalle angulaire donné entre elles.

4. Procédé de correction du déséquilibre dynamique ou balourd d'un corps rotatif selon la revendication 3, caractérisé en ce que, à partir de vecteurs indiquant lesdites valeurs de balourd initial, on détermine une pluralité de vecteurs représentant lesdites premières positions de correction et lesdits poids d'usinage correcteurs, ladite première position de correction présentant une relation donnée vis-à-vis des autres.

5. Procédé de correction de déséquilibre dynamique ou de balourd d'un corps rotatif selon la revendication 1, 2, 3 ou 4, caractérisé en ce que l'on obtient chaque nouvelle valeur de balourd initial précitée en ajoutant une fonction de ladite valeur de balourd résiduel à ladite valeur de balourd initial.

6. Procédé de correction de déséquilibre dynamique ou balourd d'un corps rotatif selon la revendication 2, caractérisé en ce que ladite étape (ii) de calcul de la position du centre de gravité comprend le calcul des emplacements de chaque centre de gravité résultant de deux vecteurs de correction adjacents qui sont les composantes vectorielles de chacune desdites valeurs de balourd initial.

0 052 015

## FIG. 1 PRIOR ART

## FIG. 2 PRIOR ART

1

## FIG. 3

```
           ( START )
              │
              ▼
        ╱─────────────╲
       ╱  U₁.    U₆    ╱────── 15
      ╱─────────────╱
   ┌──────│
   │      ▼
   │  ┌─────────────┐
   │  │ θ₂. θ₃. θ₄. θ₅ │────── 16
   │  └─────────────┘
   │      │
   │      ▼
   │  ┌─────────────┐
   │  │ U₂. U₃. U₄. U₅ │────── 17
   │  └─────────────┘
   │      │
   │      ▼
   │  ┌─────────────┐
   │  │ Z₂. Z₃. Z₄. Z₅ │────── 18
   │  └─────────────┘
   │      │
   │      ▼
   │  ┌─────────────┐
   │  │  U₇.    U₈   │────── 19
   │  └─────────────┘
   │      │           20
   │      ▼
   │    ◇───────◇
   │   ╱ |U₇|,|U₈| ╲  YES
   │  ◇  TOLERANCE  ◇──────►
   │   ╲    ?     ╱
   │    ◇───────◇
   │      │ NO      23
   │      ▼
   │  ┌─────────────┐
   └──│ U₁' = U₁ + αU₇ │
      │ U₆' = U₆ + αU₈ │
      └─────────────┘
```

$$U_1' = U_1 + \alpha U_7$$
$$U_6' = U_6 + \alpha U_8$$

21

$$\ell_2.\ \ell_3.\ \ell_4.\ \ell_5$$

22

$$\theta_2.\ \theta_3.\ \theta_4.\ \theta_5$$
$$\ell_2.\ \ell_3.\ \ell_4.\ \ell_5$$

( END )

## FIG. 4

## FIG. 5

## FIG. 6

## FIG. 7

## FIG. 8

$\ell = f(u)$

$Z = g(u)$

$\ell, Z$ (mm)

O    CORRECTIVE WEIGHT   U(g) ⟶

# FIG. 9 PRIOR ART

# FIG. 10 PRIOR ART

# FIG. 11

```
                    ┌──────────────┐
                    │    START     │
                    └──────┬───────┘
                           │
                           ▼
                  ╱─────────────────╲
                 ╱    U₁.  U₆        ╱──── 15
                ╱─────────────────╲╱
                           │
                           ▼
                    ┌──────────────┐
                    │ θ₂. θ₃. θ₄. θ₅│──── 16
                    └──────┬───────┘
                           │
                           ▼
                    ┌──────────────┐
                    │ U₂. U₃. U₄. U₅│──── 17
                    └──────┬───────┘
                           │
                           ▼
                    ┌──────────────┐
                    │ Z₂. Z₃. Z₄. Z₅│──── 18'
                    └──────┬───────┘
                           │
                           ▼
                    ┌──────────────┐
                    │   U₇.  U₈     │──── 19
                    └──────┬───────┘
```

$$U_1.\ U_6 \quad\text{— 15}$$

$$\theta_2.\ \theta_3.\ \theta_4.\ \theta_5 \quad\text{— 16}$$

$$U_2.\ U_3.\ U_4.\ U_5 \quad\text{— 17}$$

$$Z_2.\ Z_3.\ Z_4.\ Z_5 \quad\text{— 18'}$$

$$U_7.\ U_8 \quad\text{— 19}$$

**20**

$$|U_7|, |U_8| \leqq \text{TOLERANCE ?}$$

**YES** → **21**

$$\ell_2.\ \ell_3.\ \ell_4.\ \ell_5$$

**NO**

**23'**

$$U_1(Z_1) \longrightarrow U''(Z_1')$$
$$U_6(Z_6) \longrightarrow U''(Z_6')$$

**— 22**

$$\theta_2.\ \theta_3.\ \theta_4.\ \theta_5$$
$$\ell_2.\ \ell_3.\ \ell_4.\ \ell_5$$

**END**

# FIG. 12